Europäisches Patentamt

**European Patent Office**

**Office européen des brevets**

(11) Numéro de publication: **0 308 309 B1**

# (12) FASCICULE DE BREVET EUROPEEN

(45) Date de publication de fascicule du brevet: **08.07.92**  (51) Int. Cl.5: **A01L 1/04**, A01L 5/00

(21) Numéro de dépôt: **88402288.0**

(22) Date de dépôt: **12.09.88**

(54) **Dispositif de ferrage et de protection pour sabots d'équidés.**

(30) Priorité: **17.09.87 FR 8712872**

(43) Date de publication de la demande:
**22.03.89 Bulletin  89/12**

(45) Mention de la délivrance du brevet:
**08.07.92 Bulletin  92/28**

(84) Etats contractants désignés:
**AT BE CH DE ES FR GB IT LI NL SE**

(56) Documents cités:
**US-A- 2 096 504**
**US-A- 3 861 472**
**US-A- 4 580 637**

(73) Titulaire: **JALLATTE S.A.**

**F-30170 Saint-Hippolyte-du-Fort(FR)**

(72) Inventeur: **Filaine, Roger**
**Villa les Gardons Route d'Alès**
**F-30170 Saint-Hippolyte-du-Fort(FR)**
Inventeur: **Rigoulot, Pierre**
**271, Chemin du Sapeur**
**F-30000 Nimes(FR)**

(74) Mandataire: **Dawidowicz, Armand Cabinet Da-widowicz**
**18, Boulevard Pereire**
**F-75017 Paris(FR)**

## Description

L'invention concerne un dispositif de ferrage et de protection pour sabots d'équidés.

Depuis l'utilisation des fers à chevaux, on a cherché à améliorer la protection des sabots, en particulier pour procurer un amortissement des chocs. Dès la fin du siècle dernier, des brevets concernaient des dispositifs analogues à ces se- melles de chaussures adaptables aux sabots (USA-A-646029, 660788, 610804, 602837).

Les très nombreux travaux entrepris depuis cette époque ont porté sur les fers eux-mêmes et leur remplacement par des stuctures non ferreuses et déformables (USA-A-3494422 et 4122900), et sur des garnitures d'amortissement combinées à des pièces métalliques (USA-A-2024265, FR-A-2340045 et US-A-4 580 637, ce dernier document divulguant le préambule de la revendication 1).

Par exemple, le brevet FR-A-2340045 propose un dispositif de protection comprenant une pièce en matière plastique d'une seule pièce avec un renfort en métal ou en matière plastique noyé dans la matière plastique. Le renfort comporte des échancrures permettant une déformation, par exemple, par serrage dans un étau, ou est en deux parties, éventuellement articulées. Ce dispositif connu présente des inconvénients importants qui n'ont pas permis son succès. Un des inconvénients réside en ce que la mise en forme du dispositif provoque des déchirures et des séparations de la matière plastique, qui rendent le dispositif inutilisable ou dangereux.

La présente invention vise à obtenir un dispositif du type décrit au brevet FR-A-2340045 mais qui n'en présente pas les inconvénients et permette en particulier une mise en forme aisée du dispositif sans risque de l'endommager.

A cet effet, l'invention a pour objet un dispositif de ferrage et de protection pour sabots d'équidés en forme générale de fer à cheval du type comprenant un insert en métal enrobé dans une matière déformable élastiquement, ledit insert comportant des portions non recouvertes sur la tranche intérieure et/ou extérieure du dispositif, caractérisé par le fait que ledit insert est en une pièce en forme générale de fer à cheval et en métal malléable à la température ambiante et lesdites portions non recouvertes sont formées par les bords périphériques de saillies formées par des crans dans le bord intérieur et/ou extérieur de l'insert, lesdits bords périphériques n'étant par recouverts de matière déformable.

La malléabilité de l'insert et l'élasticité de la matière d'enrobage permettent la déformation permanente de l'ensemble du dispositif, par exemple, par frappe au maillet ou, de préférence, au moyen d'une machine spéciale. Le maillet ou la machine agissent directement sur l'insert par ses portions non recouvertes, de sorte que le revêtement n'est pas endommagé.

D'autres caractéristiques et avantages de l'invention ressortiront de la description suivante faite en se référant au dessin annexé dans lequel :

La figure 1 est une vue schématique en perspective de dessus d'un dispositif selon un exemple de réalisation de l'invention,

La figure 2 est une vue en perspective de dessous du dispositif de la figure 1,

La figure 3 est une vue en plan de dessous d'un dispositif selon une variante de l'invention, pour la moitié supérieure du dessin, et de l'insert seul pour la moitié inférieure, et

Les figures 4, 5, 6 et 7 sont des vues en coupe selon les lignes IV-IV, V-V, VI-VI, VII-VII de la figure 3 respectivement.

Le dispositif 1 selon l'exemple de réalisation de l'invention représenté au dessin a la forme générale d'un fer à cheval.

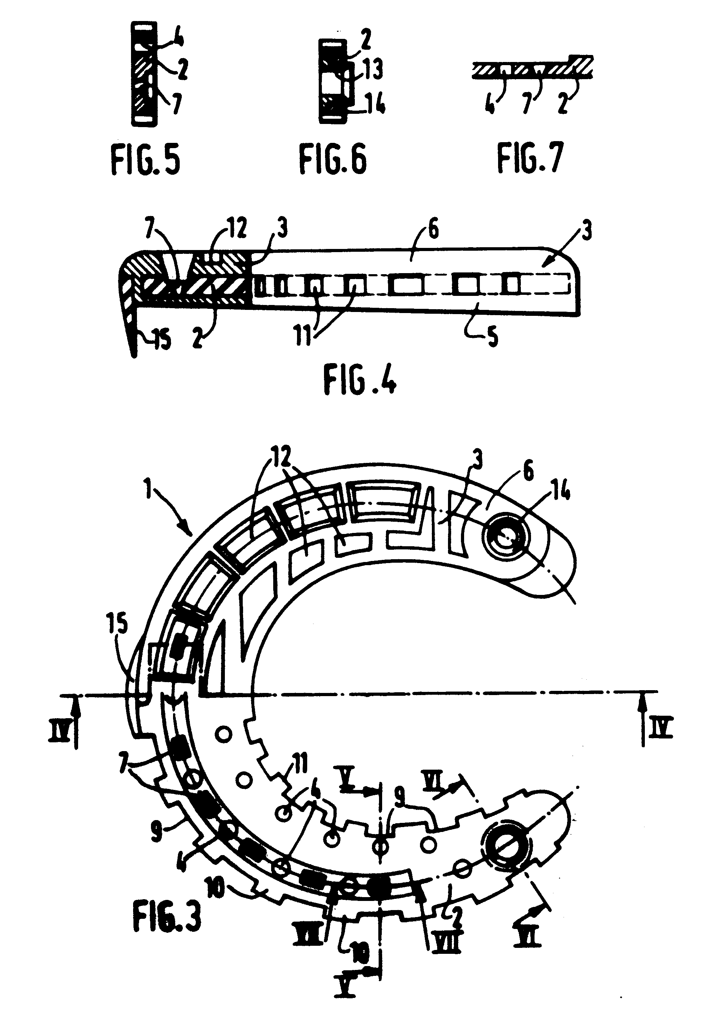

Il est constitué d'un insert 2 en métal déformable, par exemple en aluminium ou alliage d'aluminium, surmoulé dans une matière plastique 3, par exemple, du polyuréthane. Pour assurer une liaison parfaite, l'insert 2 comporte des trous 4 (figure 3) pour le passage de la matière 3, qui relie la couche supérieure 5 (en contact avec le sabot) à la couche inférieure 6 (en contact avec le sol) de la matière plastique. L'insert 2 comporte en outre des trous 7 de forme convenable pour le passage de clous de fixation 8, bien que tout autre mode de fixation au sabot, par exemple, le collage puisse être envisagé.

L'insert 2 comporte sur ses bords intérieurs et extérieurs des crans 9 ménageant des saillies 10. Dans le moule de surmoulage, le bord périphérique 11 des saillies 10 est logé contre la paroi du moule, de sorte que les bords 11 ne sont pas recouverts de matière 3 dans l'opération de surmoulage. Ces parties découvertes de l'insert 2 seront utilisées pour déformer le dispositif 1 au maillet ou au moyen d'une machine spéciale. On peut ainsi adapter le dispositif 1 à la forme du sabot et n'utiliser qu'un nombre restreint de dimensions pour le dispositif 1.

Un des avantages importants du dispositif selon l'invention réside en ce que sa pose se fait de manière traditionnelle par le maréchal-ferrant qui doit utiliser ses connaissances pour donner la forme voulue au dispositif et pour le fixer.

La couche supérieure 5 de matière 3 est peu épaisse et sa surface libre est lisse ou légèrement striée. L'insert 2 sert seulement à la contention du sabot. Dans la forme de réalisation de la figure 4, l'épaisseur de cette couche est variable linéairement, la plus grande épaisseur étant à l'arrière, afin de s'adapter à la marche du cheval qui attaque le sol par le talon.

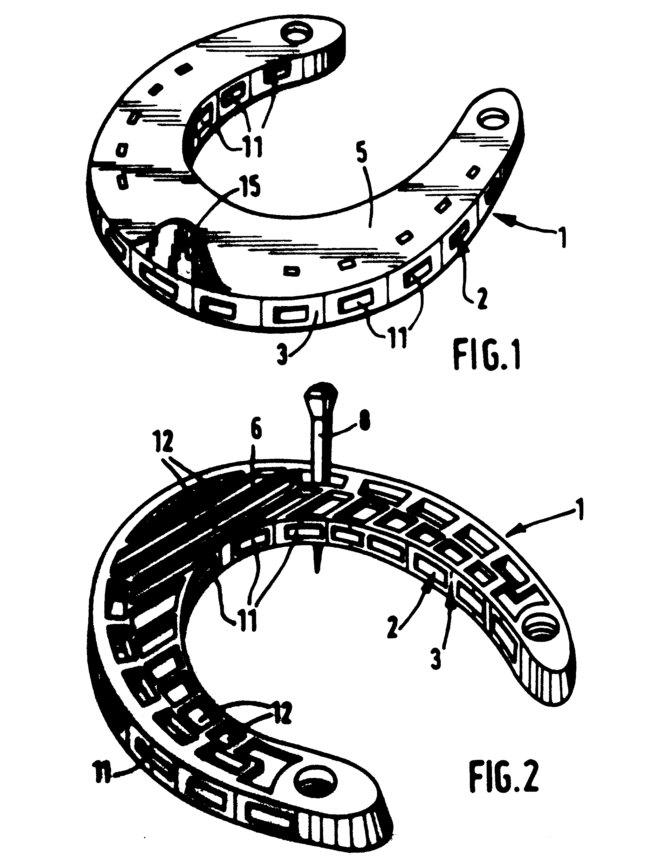

La couche inférieure 6, qui est en contact avec le sol, est plus épaisse et comporte des reliefs et creux 12 destinés à éviter les glissements et à augmenter l'amortissement élastique de la face 6. Ces reliefs et creux 12, selon les besoins, peuvent former des raies transversales (figure 2) et/ou des creux discontinus (figures 2 et 3) ou tout autre dessin permettant d'augmenter l'adhérence au sol.

Les deux extrémités de l'insert 2 comportent en outre des trous 13 destinés à recevoir des inserts 14 introduits à force puis sertis. Les inserts 14 comportent un taraudage pour le vissage de crampons. L'insert 2 comporte à son extrémité antérieure un pinçon 15 dirigé vers le haut et non recouvert de matière élastique. Le pinçon 15 peut être rapporté ou être d'une seule pièce avec l'insert, par exemple pour un insert obtenu par filage à froid. L'insert peut être en tout matériau capable de résister à l'arrachement des crampons qui subissent des efforts très importants, par exemple en acier.

Dans une forme de réalisation de l'invention, la face supérieure 5 et la face inférieure 6 du revêtement sont en des matières différentes, en particulier de duretés différentes.

On peut prévoir de munir le dispositif selon l'invention de moyens de fixation démontable d'un chausson ou d'un accessoire, en particulier pour l'utilisation en stalle, en terrain herbeux. La fixation, qui peut se faire par encliquetage, peut utiliser les faces apparentes de l'insert 2.

**Revendications**

1. Dispositif de ferrage et de protection pour sabot d'équidés en forme générale de fer à cheval du type comprenant un insert (2) en métal enrobé dans une matière déformable élastiquement, ledit insert (2) comportant des portions (11) non recouvertes sur la tranche intérieure et/ou extérieure du dispositif (1),
caractérisé par le fait que ledit insert (2) est en une pièce en forme générale de fer à cheval et en un métal malléable à la température ambiante et lesdites portions non recouvertes sont formées par les bords périphériques (11) de saillies (10) formées par des crans (9) dans le bord intérieur et/ou extérieur de l'insert (2), lesdits bords périphériques (11) n étant pas recouverts de matière déformable (3).

2. Dispositif selon la revendication 1,
caractérisé par le fait que l'insert (2) comporte des trous (4) traversés par la matière déformable (3) qui relie la couche supérieure (5) à la couche inférieure (6).

3. Dispositif selon l'une des revendications 1 et 2, caractérisé par le fait que l'épaisseur de la couche supérieure (5) est plus faible que l'épaisseur de la couche inférieure (6).

4. Dispositif selon l'une des revendications 1 à 3, caractérisé par le fait que l'épaisseur de la couche supérieure (5) est plus grande à l'arrière qu'à l'avant.

5. Dispositif selon l'une des revendications 1 à 4, caractérisé par le fait que l'insert comporte des trous (7) conformés pour le passage de clous de fixation (8).

6. Dispositif selon l'une des revendications 1 à 5, caractérisé par le fait qu'il est agencé pour être collé au sabot.

7. Dispositif selon l'une des revendications 1 à 6, caractérisé par le fait que l'insert (2) comporte des trous (13) destinés à recevoir des crampons.

8. Dispositif selon la revendication 7,
caractérisé par le fait que lesdits trous (13) reçoivent des inserts (14) introduits à force puis sertis sur lesquels sont vissés les crampons.

9. Dispositif selon l'une des revendications 1 à 8, caractérisé par le fait que l'insert (2) comporte un pinçon (15) rapporté ou d'une seule pièce, qui n'est pas recouvert de matière élastique (3).

10. Dispositif selon l'une des revendications 1 à 9, caractérisé par le fait que la face inférieure (6) du revêtement élastique (3) est munie de creux et de reliefs (12).

11. Dispositif selon l'une des revendications 1 à 10,
caractérisé par le fait qu'il comprend des moyens de fixation démontable d'un chausson ou autre accessoire.

12. Dispositif selon la revendication 11,
caractérisé par le fait que lesdits moyens de fixation coopèrent avec les portions non recouvertes (11) de l'insert (2).

13. Dispositif selon l'une des revendications 1 à 12,
caractérisé par le fait que l'insert (2) est en aluminium ou alliage d'aluminium.

14. Dispositif selon l'une des revendications 1 à 13,
caractérisé par le fait que le revêtement déformable élastiquement (3) est en polyuréthanne.

15. Dispositif selon l'une des revendications 1 à 14,
caractérisé par le fait que la couche supérieure (5) et la couche inférieure (6) du revêtement ont des duretés différentes et sont en des matières différentes et/ou en une même matière de densités différentes.

## Claims

1. A shoeing and protection device for equidae hoofs in the general shape of a horseshoe of the type including a metallic insert (2) imbedded in a resiliently deformable material, said insert (2) including portions (11) which are not covered on the inner and/or outer edge of the device (1), characterized by the fact that said insert (2) is a member having the general shape of a horseshoe and made of a metal which is malleable at room temperature and said non covered portions are formed by the peripheral edges (11) of protrusions (10) formed by notches in the inner and/or outer edge of the insert (2), said peripheral edges (11) not being covered by the deformable material (3).

2. A device according to claim 1, characterized by the fact that insert (2) is formed with holes (4) through which passes the deformable material (3) connecting the upper layer (5) with the lower layer (6).

3. A device according to one of claims 1 and 2, characterized by the fact that the thickness of the upper layer (5) is smaller than the thickness of the lower layer (6).

4. A device according to one of claims 1 to 3, characterized by the fact that the thickness of the upper layer (5) is larger at the rear than at the front.

5. A device according to one of claims 1 to 4, characterized by the fact that the insert is formed with holes (7) adapted for the passage of fixation nails (8).

6. A device according to one of claims 1 to 5, characterized by the fact that it is arranged so as to be glued onto the hoof.

7. A device according to one of claims 1 to 6, characterized by the fact that the insert (2) includes holes (13) adapted for receiving cogs.

8. A device according to claim 7, characterized by the fact that said holes (13) receive inserts (14) forcibly introduced therein and then crimped, on which are screwed the cogs.

9. A device according to one of claims 1 to 8, characterized by the fact that the insert (2) includes a separate or integral toe-clip (15) which is not covered by the resilient material (3).

10. A device according to one of claims 1 to 9, characterized by the fact that the lower face (6) of the resilient coating (3) is formed with recesses and protrusions (12).

11. A device according to one of claims 1 to 10, characterized by the fact that it includes removable fixation means for a slipper or other accessory.

12. A device according to claim 11, characterized by the fact that said fixation means cooperate with the non covered portions (11) of insert (2).

13. A device according to one of claims 1 to 12, characterized by the fact that the insert (2) is of aluminium or of an aluminium alloy.

14. A device according to one of claims 1 to 13, characterized by the fact that the resilient deformable coating (3) is in polyurethane.

15. A device according to one of claims 1 to 14, characterized by the fact that the upper layer (5) and the lower layer (6) of the coating have different hardnesses and are made of different materials and/or of the same material with different densities.

## Patentansprüche

1. Beschlag- und Schutzvorrichtung für Pferdehufe in allgemeiner Hufeisenform, enthaltend einen Einsatz (2) aus Metall, der von einem elastisch verformbaren Material umgeben ist, wobei der Einsatz (2) am Innenteil und/oder Außenteil der Vorrichtung (1) nichtbeschichtete Teile (11) aufweist, **dadurch gekennzeichnet,** daß der genannte Einsatz (2) ein allgemein hufeisenförmiges Stück ist, welches aus einem bei Umgebungstemperatur schmiedbaren Metall besteht, und daß die genannten unbeschichteten Teile aus den Umfangskanten (11) von Vorsprüngen (10) bestehen, die durch Einkerbungen (9) in der Innenkante und/oder Außenkante des Einsatzes (2) gebildet werden, wobei die genannten Umfangskanten (11) nicht mit verformbarem Material (3) überzogen sind.

2. Vorrichtung nach Anspruch 1, **dadurch gekennzeichnet,** daß der Einsatz (2) Löcher (4) aufweist, durch die das verformbare Material (3) hindurch verläuft, welches die obere Schicht (5) mit der unteren Schicht (6) verbindet.

3. Vorrichtung nach einem der Ansprüche 1 und 2, **dadurch gekennzeichnet,** daß die Dicke der oberen Schicht (5) geringer ist als die Dicke der unteren Schicht (6).

4. Vorrichtung nach einem der Ansprüche 1 bis 3, **dadurch gekennzeichnet,** daß die Dicke der oberen Schicht (5) hinten größer ist als vorne.

5. Vorrichtung nach einem der Ansprüche 1 bis 4, **dadurch gekennzeichnet,** daß der Einsatz Löcher (7) aufweist, die für den Durchtritt von Befestigungsnägeln (8) ausgebildet sind.

6. Vorrichtung nach einem der Ansprüche 1 bis 5, **dadurch gekennzeichnet,** daß aufgrund ihrer Ausführung eine Verklebung mit dem Huf erfolgen kann.

7. Vorrichtung nach einem der Ansprüche 1 bis 6, **dadurch gekennzeichnet,** daß der Einsatz (2) Löcher (13) aufweist, die zur Aufnahme von Klammern dienen.

8. Vorrichtung nach Anspruch 7, **dadurch gekennzeichnet,** daß die genannten Löcher (13) Einsätze (14) aufnehmen, die eingepreßt und dann umgebogen werden und womit die Klammern verschraubt werden.

9. Vorrichtung nach einem der Ansprüche 1 bis 8, **dadurch gekennzeichnet,** daß der Einsatz (2) ein Klemmelement (15) aufweist, welches daran angebaut ist oder damit ein Stück bildet und nicht mit elastischem Material (3) beschichtet ist.

10. Vorrichtung nach einem der Ansprüche 1 bis 9, **dadurch gekennzeichnet,** daß die Innenfläche (6) der elastischen Beschichtung (3) mit Vertiefungen und Erhöhungen (12) versehen ist.

11. Vorrichtung nach einem der Ansprüche 1 bis 10, **dadurch gekennzeichnet,** daß sie abnehmbare Mittel zur Befestigung eines Überschuhs oder eines sonstigen Zubehörteils aufweist.

12. Vorrichtung nach Anspruch 11, **dadurch gekennzeichnet,** daß die genannten Befestigungsmittel mit den nichtbeschichteten Teilen (11) des Einsatzes (2) zusammenwirken.

13. Vorrichtung nach einem der Ansprüche 1 bis 12, **dadurch gekennzeichnet,** daß der Einsatz (2) aus Aluminium oder einer Alu-Legierung besteht.

14. Vorrichtung nach einem der Ansprüche 1 bis 13, **dadurch gekennzeichnet,** daß der elastisch verformbare Überzug (3) aus Polyurethan besteht.

15. Vorrichtung nach einem der Ansprüche 1 bis 14, **dadurch gekennzeichnet,** daß die obere Schicht (5) und die untere Schicht (6) des Überzugs unterschiedliche Härten aufweisen und aus unterschiedlichen Werkstoffen und/oder dem gleichen Werkstoff mit verschiedenen Dichten bestehen.

FIG.1

FIG.2

FIG.5 FIG.6 FIG.7

FIG.4

FIG.3